# EUROPEAN PATENT APPLICATION

(11) **EP 1 244 253 A1**
(43) Date of publication of application: **25.09.2002**
(21) Application number: 00987683.0
(22) Date of filing: 21.12.2000
(51) Int. Cl.: H04L 12/46, H04Q 3/42, H04M 3/00

(54) **COMMUNICATION DEVICE**

(30) Priority: 28.12.1999 JP 37581199
(71) Applicant: Yugen Kaisha LS Net, Chiba-ken 279-0013 (JP)
(72) Inventor: SAWADA, Akemi, Yugen Kaisha LS Net, Urayasu-shi, Chiba 279-0013 (JP)
(74) Representative: Goddar, Heinz J., Dr.
(86) International application number: JP0009085
(87) International publication number: WO01048978

(57) **Abstract**

A plurality of information streams are transferred in a broadcast manner from a host device 205 connected to a LAN 204 in a switching station 200. A host device 101 at a subscriber site 100 is placed within the same network as the LAN 204, and then receives the streams transferred over a subscriber line 300. Each of the streams is assigned with a socket using a destination port number. The host device 101 receives in real time, stores, or discard the streams based on the definition of the sockets at the host device.

## Description

### TECHNICAL FIELD

The present invention relates to a communications system for providing information through a network using a broadcast technique, and, more specifically, one enabling to transmit content information for example picture information, audio information, and text information, through a network using subscriber lines.

### BACKGROUND ART

In the past, provision of information from one origin to multiple destinations is basically performed by a broadcast system. However the broadcast system is a system which transmits information in a wide-range broadcast area, and is not suitable for providing information from one origin to multiple destinations in a small area. A cable broadcast system enables to limit the broadcast area, and can provide information related to communities within the area. However, it is costly to distribute cables etc.

### DISCLOSURE OF THE INVENTION

In view of the foregoing, it is an object of the present invention to provide a communications system to facilitate simple information provision from one origin to multiple destinations.

Various aspects of the present invention attaining the above object are described in the attached claims.

According to the present invention, a host device at a subscriber site is connected to a subscriber line, and then connected through the subscriber line to a network, and receives content information transferred in a broadcast manner onto the network. The content information is of a still picture type, a motion picture type, a audio type, a text type and the like type.

With this configuration, information can be easily provided from one origin to multiple destinations.

Moreover, information streams can be treated as channels by using sockets. Those channels are similar to conventional ones for switching broadcast programs.

The present invention can be implemented not only as a system or device, but also as a method. Obviously, a part of the present invention can be configured in computer software. It is also obvious that the technical scope of the present invention covers recording media which stores the computer software.

### BRIEF DESCRIPTION OF THE DRAWINGS

Fig. 1 illustrates a preferred embodiment of the present invention; and
Fig. 2 illustrates a graphical user interface used with a host device 101 at a subscriber site according to the embodiment.

### BEST MODE FOR CARRYING OUT THE INVENTION

An embodiment of the present invention will be described in the below.

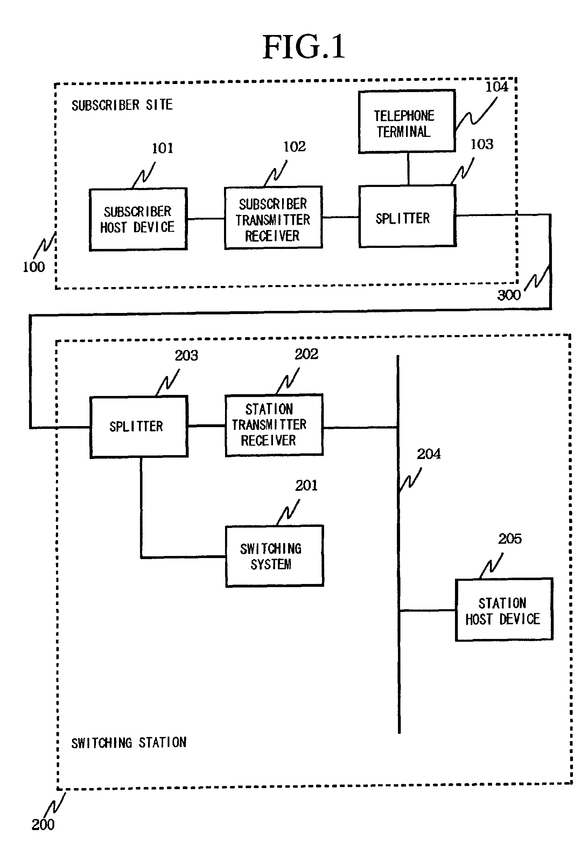

Fig. 1 illustrates the overall configuration of a communications system according to the embodiment of present invention, and as shown in the diagram, a subscriber site 100 and an switching station 200 are connected through a subscriber line 300. In the subscriber site 100, a host device 101, a subscriber side transmitter/receiver 102, a splitter 103, and telephone terminal 104, etc. are provided. In the switching station 200, a switching system 201, a station side transmitter/receiver 202, a splitter 203 and a LAN (Local Area Network) 204, and a host device 205 are provided. The subscriber site 100 can a conventional house for residence or an office building of a company or the like.

The subscriber side transmitter/receiver 102 and the station side transmitter/receiver 202 transmit and receive xDSL (digital sub-scriber line) signals. The other ends of the transmitter/receivers 102, 202 are ,for instance, equipped with Ethernet interfaces. Splitters 103, 203 split among telephone signals and xDSL signals. The telephone signals are exchanged between the telephone terminal 104 and the switching system 201. The switching system 201 transmits telephone signals to an other party telephone terminal through relay switching systems (not shown) and the like and receives the same from the other party telephone terminal.

The host device 101 is connected to the LAN 204 through the subscribe side transmitter/receiver 102, the subscriber side splitter 103, the station side splitter 203, and the station side transmitter/receiver 202. As a result, the host device 101 is placed in the network configured with LAN 24 etc. The host device 101 is assigned with an address of the network (a private IP address or global IP address.) Of course, other network addressing systems can be adopted.

The host device 205 on the station side transmits a plurality of information streams with a broadcast address using a TCP/IP (Transmission Control Protocol/Internet Protocol) protocol. Moreover, the information streams are assigned with respective destination port numbers. Those port numbers for example p1, p2, p3, ..., are related to channel numbers for example ch1, ch2, ch3,... Those port numbers or channel numbers are used for identifying information providing programs. Each information stream can include at least one of still picture information, motion picture information, text information, and audio information, etc. The transfer rate can be adapted based on the content type of a steam.

The subscriber side host device 101 receives streams thus transferred in a broadcast manner in accordance with a the TCP/IP protocol. The host device 101 can define the selection of enabled sockets for receiving streams at a communications interface (Ethernet NIC). A stream having a broadcast address and a corresponding port number p1, p2, p3, or the like is sent to a corresponding socket and is subjected to packet discard or packet allowance based on the definition. Moreover, the allowed packets are sent to the application process which corresponds to the socket. The application process can be of a type which displays information in real time, or which prints out the information, or which stores information on an auxiliary storage device such as a hard disk, or of the like type.

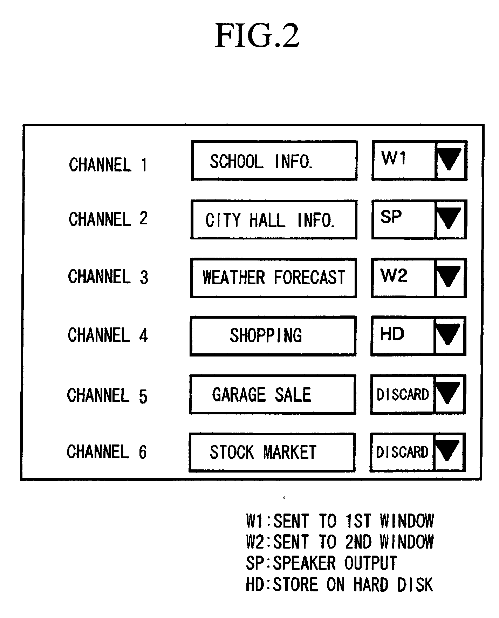

At the subscriber side host device 101, a graphical user interface such as shown in Fig. 2 can be adopted for definition of channels ( sockets). In the example of Fig. 2, the channel ch1 is received in real time , and displayed in the first window. The channel ch2 is also received in real time and outputted to the speaker. The channel ch3 is also received and displayed in another window. The channel ch4 is recorded on a hard disk (it is not outputted in real time. But it can be outputted in real time in another mode.) The channels ch5 and ch6 are disabled.

A part or the whole of the setting information can be sent through a network or read out from a recording card to set the selections.

Also, the destination port numbers of the stream from the station side host device 205 can be changed time by time, and correspondingly the setting information at the subscriber side host device 101 can be modified. And, the setting information can be charged.

In the embodiment described above, information can be provided to multiple subscribers through subscriber lines using a broadcast technique. Moreover, the broadcast streams or channels can be selected using a socket technique.

The present invention is not confined with the details disclosed with the preferred embodiment, and various modification in form and detail can be made without departing from the spirit and scope of the present invention. For instance, wireless subscriber lines of a mobile telephone system can be used for transferring information in a broadcast manner in place of the conventional subscriber lines. Moreover, xDSL signals can be replaced with ISDN signals, etc. While the branch is placed in front of the subscriber switching system for connection to the transmitter/receiver 202 in the above description, the branch can be placed in front of a relay switching system. Also, streams to be sent can be originated from not the host device 205 in the network of the LAN 204 but a host device in another network. The Streams originated from the host device in the another network can be routed to the network 204 by a router or gateway, and then sent to the subscriber side host device 101 by broadcast. In this case, the destination address is modified into a broadcast address by the gateway, or broadcast packets sent for a predetermined socket in the another network are sunk to the network 204. Also, an access server can be provided for receiving broadcast streams coming from the outside of the network 204. Of course, the streams coming from the outside of the network 204 and the streams coming from the host device 205 can be used together.

Also, a LAN 204 of one switching station can be interconnected with one or more LAN 204 of other one or more switching station 200 using leased lines or virtual private networks to form a large scale LAN, and then a host device 205 for providing content information can be placed for the large scale LAN.

Also, using the IPv6 (Internet Protocol Version 6), a multicast technique provides one to multiple points transfer in various manners. The conventional broadcast in a network can be achieved by the multicast in the ITv6. Moreover, information can be sent to a lot of addresses over plural networks, and information transmitted from one host can be transferred in a broadcast manner within each of the plural network (Of course, IPv6 routers etc. are necessary). In this invention, it is important that the same stream is transferred in a broadcast manner within one network, and both of the conventional broadcast technique and the multicast technique of the IPv6 can be utilized.

### INDUSTRIAL APPLICABILITY OF THE INVENTION

As described above, according to he present invention, information can be transferred from one point to multiple points in a simple manner. Moreover, plural streams can be selected with sockets.

## Claims

1. A communications system comprising:
a first host device connected to a subscriber line at a subscriber point for receiving content information transferred through the subscriber line in a broadcast manner;
branching means connected to the subscriber line;
switching system means connected to one terminal of the branching means;
a second host device provided as associated with the switching system means, and connected to another terminal of the branching means, for transferring the content information in a broadcast manner through the subscriber line to the first host device.

2. A communications system comprising:
a first host device connected to a subscriber line at a subscriber point for receiving content information transferred through the subscriber line in a broadcast manner;
branching means connected to the subscriber line;
switching system means connected to one terminal of the branching means;
a second host device provided connected to another terminal of the branching means, for transferring the content information in a broadcast manner through the subscriber line to the first host device.

3. The communications system of claim 2, wherein the content information is transferred from the second host device to the first host device in accordance with the TCP/IP protocol.

4. The communications system of claim 3, wherein the content information is distributed to the first host device using a broadcast address.

5. The communications system of claim 4, wherein the content information is distributed as plural streams, each of the streams being separately received using corresponding sockets.

6. The communications system of claim 5, wherein the sockets are defined with the broadcast address and destination port numbers of the content information.

7. The communications system of claim 6, wherein the first host device has means for setting one of a first mode for outputting a received stream in real time, a second mode for storing a received stream in such a manner that the stored stream can be read out in response to a predetermined event, and a third mode for discarding a received stream, for each of the sockets.

8. The communications system of claim 2, wherein the content information include at least one of still picture information, motion picture information, text information and audio information.

9. A subscriber host device connected to a subscriber line at a subscriber point for receiving a plurality of streams of content information transferred through the subscriber line in a broadcast manner, the streams being associated with respective sockets, wherein the streams are selectively received using the sockets.

10. A subscriber host device of claim 9, wherein the sockets are defined with TCP/IP port numbers.

11. An information providing host device transferring content information, to a subscriber host device connected to a subscriber line at a subscriber point, from another point of the subscriber line, in a broadcast manner, wherein the content information is transferred as streams in the broadcast manner, the streams being associated with respective sockets.

12. The information providing host device of claim 11, wherein the sockets are associated with the respective streams using TCP/IP port numbers.

13. An information receiving host device connected to a subscriber line at a subscriber point for receiving a plurality of streams of content information transferred through the subscriber line in a broadcast manner, the streams being received using corresponding sockets.

14. The information receiving host device of claim 13, wherein the sockets are associated to the streams using TCP/IP port numbers.
